# EUROPEAN PATENT APPLICATION

(11) **EP 4 340 421 A1**
(43) Date of publication of application: **20.03.2024**
(21) Application number: 22827221.7
(22) Date of filing: 10.05.2022
(51) Int. Cl.: H04W 12/041

(54) **SESSION KEY GENERATION METHOD AND APPARATUS**

(30) Priority: 22.06.2021 CN 202110690839
(71) Applicant: Huawei Technologies Co., Ltd., Longgang Shenzhen, Guangdong 518129 (CN)
(72) Inventor: YAN, Xueqiang, Shenzhen, Guangdong 518129 (CN); ZHAO, Mingyu, Shenzhen, Guangdong 518129 (CN); LIU, Fei, Shenzhen, Guangdong 518129 (CN); WANG, Donghui, Shenzhen, Guangdong 518129 (CN)
(74) Representative: Maiwald GmbH
(86) International application number: PCT/CN2022/091869
(87) International publication number: WO 2022/267723

(57) **Abstract**

This application provides a session key generation method and apparatus. The method includes: A terminal device obtains a first public key of a radio access network device from a blockchain, where the first public key is signed by using an operator private key, and the first public key is generated based on a private key of the radio access network device. The terminal device processes the first public key by using an operator public key, to obtain a second public key of the radio access network device. The terminal device generates a first session key based on a first private key of the terminal device and the second public key. According to the foregoing technical solution, session key distribution is implemented in a decentralized or distributed architecture, and a man-in-the-middle attack risk is reduced.

## Description

This application claims priority to Chinese Patent Application No. 202110690839.2, filed with the China National Intellectual Property Administration on June 22, 2021 and entitled "SESSION KEY GENERATION METHOD AND APPARATUS", which is incorporated herein by reference in its entirety.

### TECHNICAL FIELD

This application relates to the communication field, and more specifically, to a session key generation method and apparatus.

### BACKGROUND

In a 5th generation (5th generation, 5G) communication system, unified derivation of keys for 3rd generation partnership project (the 3rd generation partnership project, 3GPP) access and non-3GPP access is completed. To be specific, a same session key is derived on a terminal device side based on a same key algorithm, and is used for encrypted communication between a terminal device and a network device.

However, in a decentralized or distributed network architecture, there is no centralized core network. As a result, a session key generation method in an existing 5G centralized key derivation architecture is no longer applicable. Therefore, in the decentralized or distributed architecture, how to generate a session key is an urgent technical problem to be resolved.

### SUMMARY

This application provides a session key generation method and apparatus, to implement session key distribution in a decentralized or distributed architecture and reduce a man-in-the-middle attack risk.

According to a first aspect, a session key generation method is provided. For example, the method may be performed by a terminal device, or may be performed by a component (such as a circuit, a chip, or a chip system) configured in the terminal device. This is not limited in this application.

The method includes: A terminal device obtains a first public key of a radio access network device from a blockchain, where the first public key of the radio access network device is a public key that is of the radio access network device and that is signed by using an operator private key, and the first public key of the radio access network device is generated based on a private key of the radio access network device. The terminal device processes the first public key of the radio access network device by using an operator public key, to obtain a second public key of the radio access network device. The terminal device generates a first session key based on a first private key of the terminal device and the second public key of the radio access network device.

In the foregoing solution, the public key that is of the radio access network device and that is signed by using the operator private key is obtained from the blockchain, and a session key is generated based on the public key of the radio access network device and a private key of the terminal device, so that the session key can be generated in a decentralized or distributed architecture. In addition, a trust anchor is constructed on the blockchain, to reduce a man-in-the-middle attack risk during public key distribution.

With reference to the first aspect, in some implementations of the first aspect, the method further includes: The terminal device sends a first message to the radio access network device, where the first message includes a first public key of the terminal device, the first public key of the terminal device is a public key that is of the terminal device and that is encrypted by using the first session key, the first public key of the terminal device is generated based on a second private key of the terminal device, and the second private key of the terminal device is different from the first private key of the terminal device. The terminal device generates a second session key based on the second private key of the terminal device and the second public key of the radio access network device.

In the foregoing solution, a new public key generated by the terminal device is encrypted by using an existing session key, and the session key is updated based on an actual requirement, based on specific time, or periodically without depending on two-way authentication, so that excessive exposure of a weakness of an asymmetric key can be reduced, and a quantum attack risk can be reduced to a maximum extent.

With reference to the first aspect, in some implementations of the first aspect, the method further includes: The terminal device receives a second message from the radio access network device, where the second message includes a first random number encrypted by using a second public key of the terminal device, the second public key of the terminal device has been verified by using the operator private key, and the second public key of the terminal device is generated based on the first private key of the terminal device. The terminal device decrypts, by using the first private key of the terminal device, the first random number encrypted by using the second public key of the terminal device, to obtain the decrypted first random number. The terminal device sends a first response message to the radio access network device, where the first response message includes the first random number encrypted by using the second public key of the radio access network device.

The first random number is generated by the radio access network device.

With reference to the first aspect, in some implementations of the first aspect, the first response message further includes a second random number encrypted by using the second public key of the radio access network device.

The second random number is generated by the terminal device.

With reference to the first aspect, in some implementations of the first aspect, the method further includes: The terminal device receives a third message from the radio access network device, where the third message includes the second random number encrypted by using the second public key of the terminal device. The terminal device decrypts, by using the first private key of the terminal device, the second random number encrypted by using the second public key of the terminal device, to obtain the decrypted second random number.

With reference to the first aspect, in some implementations of the first aspect, that a terminal device obtains a first public key of a radio access network device from a blockchain includes: The terminal device sends a fourth message to the blockchain, where the fourth message includes an identifier of the radio access network device, and the fourth message is used to request the first public key of the radio access network device. The terminal device receives a second response message from the blockchain, where the second response message includes the first public key of the radio access network device.

In the foregoing solution, mutual authentication between the terminal device and the radio access network device is implemented by using the random numbers respectively generated by the terminal device and the radio access network device. During authentication, the session key is generated based on elliptic curve Diffie-Hellman ECDH key agreement instead of a random number. The trust anchor is constructed on the blockchain, and ac root key does not need to be shared between the terminal device and the radio access network device in advance, to resolve a trust assumption problem of symmetric key distribution.

According to a second aspect, a session key generation method is provided. For example, the method may be performed by a radio access network device, or may be performed by a component (such as a circuit, a chip, or a chip system) configured in the radio access network device. This is not limited in this application.

The method includes: A radio access network device obtains a third public key of a terminal device from a blockchain, where the third public key of the terminal device is a public key that is of the terminal device and that is signed by using an operator private key, and the third public key of the terminal device is generated based on a first private key of the terminal device. The radio access network device processes the third public key of the terminal device by using an operator public key, to obtain a second public key of the terminal device. The radio access network device generates a first session key based on a private key of the radio access network device and the second public key of the terminal device.

Therefore, in this embodiment of this application, the public key that is of the terminal device and that is signed by using the operator private key is obtained from the blockchain, and a session key is generated based on the public key of the terminal device and the private key of the radio access network device, so that the session key can be generated in a decentralized or distributed architecture. In addition, a trust anchor is constructed on the blockchain, to reduce a man-in-the-middle attack risk during public key distribution.

It should be understood that the second aspect is performed by the radio access network device, the first aspect is performed by the terminal device, and the method in the first aspect corresponds to the method in the second aspect. For some specific implementations and beneficial effects, refer to the foregoing descriptions. Detailed descriptions are properly omitted herein.

With reference to the second aspect, in some implementations of the second aspect, the method further includes: The radio access network device receives a first message from the terminal device, where the first message includes a first public key of the terminal device, the first public key of the terminal device is a public key that is of the terminal device and that is encrypted by using the first session key, the first public key of the terminal device is generated based on a second private key of the terminal device, and the second private key of the terminal device is different from the first private key of the terminal device. The radio access network device decrypts the first public key of the terminal device by using the first session key, to obtain a fourth public key of the terminal device. The radio access network device generates a second session key based on the private key of the radio access network device and the fourth public key of the terminal device.

With reference to the second aspect, in some implementations of the second aspect, the method further includes: The radio access network device sends a fifth message to the blockchain, where the fifth message includes the fourth public key of the terminal device, and the fifth message is used by the blockchain to sign the fourth public key of the terminal device by using the operator private key.

With reference to the second aspect, in some implementations of the second aspect, the method further includes: The radio access network device encrypts a first random number by using the second public key of the terminal device. The radio access network device sends a second message to the terminal device, where the second message includes the first random number encrypted by using the second public key of the terminal device. The radio access network device receives a first response message from the terminal device, where the first response message includes the first random number encrypted by using a second public key of the radio access network device, and the second public key of the radio access network device has been verified by using the operator public key. The radio access network device decrypts, by using the private key of the radio access network device, the first random number encrypted by using the second public key of the radio access network device, to obtain the decrypted first random number.

The first random number is generated by the radio access network device.

With reference to the second aspect, in some implementations of the second aspect, the first response message further includes a second random number encrypted by using the second public key of the radio access network device.

The second random number is generated by the terminal device.

With reference to the second aspect, in some implementations of the second aspect, the method further includes: The radio access network device decrypts, by using the private key of the radio access network device, the second random number encrypted by using the second public key of the radio access network device, to obtain the decrypted second random number. The radio access network device sends a third message to the terminal device, where the third message includes the second random number encrypted by using the second public key of the terminal device.

With reference to the second aspect, in some implementations of the second aspect, that a radio access network device obtains a third public key of a terminal device from a blockchain includes: The radio access network device sends a sixth message to the blockchain, where the sixth message includes an identifier of the terminal device, and the sixth message is used to request the third public key of the terminal device. The radio access network device receives a third response message from the blockchain, where the third response message includes the third public key of the terminal device.

According to a third aspect, a session key update method is provided. For example, the method may be performed by a terminal device, or may be performed by a component (such as a circuit, a chip, or a chip system) configured in the terminal device. This is not limited in this application.

The method includes: A terminal device sends a first message to a radio access network device, where the first message includes a first public key of the terminal device, and the first public key of the terminal device is a public key that is of the terminal device and that is encrypted by using a first session key. The terminal device generates a second session key based on a first private key of the terminal device and a first public key of the radio access network device, where the first public key of the radio access network device has been verified by using an operator private key.

Therefore, in this embodiment of this application, a new public key generated by the terminal device is encrypted by using an existing session key, and the session key is updated without depending on two-way authentication, so that excessive exposure of a weakness of an asymmetric key can be reduced, and a quantum attack risk can be reduced to a maximum extent.

With reference to the third aspect, in some implementations of the third aspect, the method further includes: The terminal device obtains a second public key of the radio access network device from a blockchain, where the second public key of the radio access network device is a public key that is of the radio access network device and that is signed by using the operator private key, and the second public key of the radio access network device is generated based on a private key of the radio access network device. The terminal device processes the second public key of the radio access network device by using an operator public key, to obtain the first public key of the radio access network device. The terminal device generates the first session key based on a second private key of the terminal device and the first public key of the radio access network device, where the first private key of the terminal device is different from the second private key of the terminal device.

With reference to the third aspect, in some implementations of the third aspect, the method further includes: The terminal device receives a second message from the radio access network device, where the second message includes a first random number encrypted by using a second public key of the terminal device, the second public key of the terminal device has been verified by using the operator private key, and the second public key of the terminal device is generated based on the second private key of the terminal device. The terminal device decrypts, by using the second private key of the terminal device, the first random number encrypted by using the second public key of the terminal device, to obtain the decrypted first random number. The terminal device sends a first response message to the radio access network device, where the first response message includes the first random number encrypted by using the first public key of the radio access network device.

The first random number is generated by the radio access network device.

With reference to the third aspect, in some implementations of the third aspect, the first response message further includes a second random number encrypted by using the first public key of the radio access network device.

The second random number is generated by the terminal device.

With reference to the third aspect, in some implementations of the third aspect, the method further includes: The terminal device receives a third message from the radio access network device, where the third message includes the second random number encrypted by using the second public key of the terminal device. The terminal device decrypts, by using the second private key of the terminal device, the second random number encrypted by using the second public key of the terminal device, to obtain the decrypted second random number.

With reference to the third aspect, in some implementations of the third aspect, that the terminal device obtains a second public key of the radio access network device from a blockchain includes: The terminal device sends a fourth message to the blockchain, where the fourth message includes an identifier of the radio access network device, and the fourth message is used to request the second public key of the radio access network device. The terminal device receives a second response message from the blockchain, where the second response message includes the second public key of the radio access network device.

According to a fourth aspect, a session key generation method is provided. For example, the method may be performed by a radio access network device, or may be performed by a component (such as a circuit, a chip, or a chip system) configured in the radio access network device. This is not limited in this application.

The method includes: A radio access network device receives a first message from a terminal device, where the first message includes a first public key of the terminal device, and the first public key of the terminal device is a public key that is of the terminal device and that is encrypted by using a first session key. The radio access network device decrypts the first public key of the terminal device by using the first session key, to obtain a third public key of the terminal device. The radio access network device generates a second session key based on a private key of the radio access network device and the third public key of the terminal device.

With reference to the fourth aspect, in some implementations of the fourth aspect, the method further includes: The radio access network device sends a fifth message to a blockchain, where the fifth message includes the third public key of the terminal device, and the fifth message is used by the blockchain to sign the third public key of the terminal device.

With reference to the fourth aspect, in some implementations of the fourth aspect, the method further includes: The radio access network device obtains a fourth public key of the terminal device from the blockchain, where the fourth public key of the terminal device is a public key that is of the terminal device and that is signed by using an operator private key. The radio access network device processes the fourth public key of the terminal device by using an operator public key, to obtain a second public key of the terminal device, where the second public key of the terminal device is generated based on a second private key of the terminal device, the first public key of the terminal device is generated based on the first private key of the terminal device, and the first private key of the terminal device is different from the second private key of the terminal device. The radio access network device generates a second session key based on the private key of the radio access network device and the public key of the terminal device.

With reference to the fourth aspect, in some implementations of the fourth aspect, the method further includes: The radio access network device encrypts a first random number by using the second public key of the terminal device. The radio access network device sends a second message to the terminal device, where the second message includes the first random number encrypted by using the second public key of the terminal device. The radio access network device receives a first response message from the terminal device, where the first response message includes the first random number encrypted by using a first public key of the radio access network device. The radio access network device decrypts, by using the private key of the radio access network device, the first random number encrypted by using the first public key of the radio access network device, to obtain the decrypted first random number.

The first random number is generated by the radio access network device.

With reference to the fourth aspect, in some implementations of the fourth aspect, the first response message further includes a second random number encrypted by using the first public key of the radio access network device.

The second random number is generated by the terminal device.

With reference to the fourth aspect, in some implementations of the fourth aspect, the method further includes: The radio access network device decrypts, by using the private key of the radio access network device, the second random number encrypted by using the first public key of the radio access network device, to obtain the decrypted second random number. The radio access network device sends a third message to the terminal device, where the third message includes the second random number encrypted by using the second public key of the terminal device.

With reference to the fourth aspect, in some implementations of the fourth aspect, that the radio access network device obtains a fourth public key of the terminal device from the blockchain includes: The radio access network device sends a sixth message to the blockchain, where the sixth message includes an identifier of the terminal device, and the sixth message is used to request the fourth public key of the terminal device. The radio access network device receives a third response message from the blockchain, where the third response message includes the fourth public key of the terminal device.

According to a fifth aspect, a session key generation apparatus is provided. The apparatus includes a transceiver unit and a processing unit. The transceiver unit is configured to obtain a first public key of a radio access network device from a blockchain, where the first public key of the radio access network device is a public key that is of the radio access network device and that is signed by using an operator private key, and the first public key of the radio access network device is generated based on a private key of the radio access network device. The processing unit is configured to process the first public key of the radio access network device by using an operator public key, to obtain a second public key of the radio access network device; and generate a first session key based on a first private key of the terminal device and the second public key of the radio access network device.

With reference to the fifth aspect, in some implementations of the fifth aspect, the transceiver unit is further configured to send a first message to the radio access network device, where the first message includes a first public key of the terminal device, the first public key of the terminal device is a public key that is of the terminal device and that is encrypted by using the first session key, the first public key of the terminal device is generated based on a second private key of the terminal device, and the second private key of the terminal device is different from the first private key of the terminal device. The processing unit is further configured to generate a second session key based on the second private key of the terminal device and the second public key of the radio access network device.

With reference to the fifth aspect, in some implementations of the fifth aspect, the transceiver unit is further configured to receive a second message from the radio access network device, where the second message includes a first random number encrypted by using a second public key of the terminal device, the second public key of the terminal device has been verified by using the operator private key, and the second public key of the terminal device is generated based on the first private key of the terminal device. The processing unit is further configured to decrypt, by using the first private key of the terminal device, the first random number encrypted by using the second public key of the terminal device, to obtain the decrypted first random number. The transceiver unit is further configured to send a first response message to the radio access network device, where the first response message includes the first random number encrypted by using the second public key of the radio access network device.

With reference to the fifth aspect, in some implementations of the fifth aspect, the first response message further includes a second random number encrypted by using the second public key of the radio access network device.

With reference to the fifth aspect, in some implementations of the fifth aspect, the transceiver unit is further configured to receive a third message from the radio access network device, where the third message includes the second random number encrypted by using the second public key of the terminal device. The processing unit is further configured to decrypt, by using the first private key of the terminal device, the second random number encrypted by using the second public key of the terminal device, to obtain the decrypted second random number.

With reference to the fifth aspect, in some implementations of the fifth aspect, that the transceiver unit is specifically configured to obtain a first public key of a radio access network device from a blockchain includes: The terminal device sends a fourth message to the blockchain, where the fourth message includes an identifier of the radio access network device, and the fourth message is used to request the first public key of the radio access network device; and receives a second response message from the blockchain, where the second response message includes the first public key of the radio access network device.

According to a sixth aspect, a session key generation apparatus is provided. The apparatus includes a transceiver unit and a processing unit. The transceiver unit is configured to obtain a third public key of a terminal device from a blockchain, where the third public key of the terminal device is a public key that is of the terminal device and that is signed by using an operator private key, and the third public key of the terminal device is generated based on a first private key of the terminal device. The processing unit is configured to process the third public key of the terminal device by using an operator public key, to obtain a second public key of the terminal device; and generate a second session key based on a private key of the radio access network device and the second public key of the terminal device.

With reference to the sixth aspect, in some implementations of the sixth aspect, the transceiver unit is further configured to receive a first message from the terminal device, where the first message includes a first public key of the terminal device, the first public key of the terminal device is a public key that is of the terminal device and that is encrypted by using a first session key, the first public key of the terminal device is generated based on a second private key of the terminal device, and the second private key of the terminal device is different from the first private key of the terminal device. The processing unit is further configured to decrypt the first public key of the terminal device by using the first session key, to obtain a fourth public key of the terminal device; and generate the second session key based on the private key of the radio access network device and the fourth public key of the terminal device.

With reference to the sixth aspect, in some implementations of the sixth aspect, the transceiver unit is further configured to send a fifth message to the blockchain, where the fifth message includes the fourth public key of the terminal device, and the fifth message is used by the blockchain to sign the fourth public key of the terminal device by using the operator private key.

With reference to the sixth aspect, in some implementations of the sixth aspect, the processing unit is further configured to encrypt a first random number by using the second public key of the terminal device. The transceiver unit is further configured to send a second message to the terminal device, where the second message includes the first random number encrypted by using the second public key of the terminal device; and receive a first response message from the terminal device, where the first response message includes the first random number encrypted by using a second public key of the radio access network device, and the second public key of the radio access network device has been verified by using the operator public key. The processing unit is further configured to decrypt, by using the private key of the radio access network device, the first random number encrypted by using the second public key of the radio access network device, to obtain the decrypted first random number.

With reference to the sixth aspect, in some implementations of the sixth aspect, the first response message further includes a second random number encrypted by using the second public key of the radio access network device.

With reference to the sixth aspect, in some implementations of the sixth aspect, the processing unit is further configured to decrypt, by using the private key of the radio access network device, the second random number encrypted by using the second public key of the radio access network device, to obtain the decrypted second random number. The transceiver unit is further configured to send a third message to the terminal device, where the third message includes the second random number encrypted by using the second public key of the terminal device.

According to a seventh aspect, a session key update apparatus is provided. The apparatus includes a transceiver unit and a processing unit. The transceiver unit is configured to send a first message to a radio access network device, where the first message includes a first public key of the terminal device, and the first public key of the terminal device is a public key that is of the terminal device and that is encrypted by using a first session key. The processing unit is configured to generate a second session key based on a first private key of the terminal device and a first public key of the radio access network device, where the first public key of the radio access network device has been verified by using an operator private key.

With reference to the seventh aspect, in some implementations of the seventh aspect, the transceiver unit is further configured to obtain a second public key of the radio access network device from a blockchain, where the second public key of the radio access network device is a public key that is of the radio access network device and that is signed by using the operator private key, and the second public key of the radio access network device is generated based on a private key of the radio access network device. The processing unit is further configured to process the second public key of the radio access network device by using an operator public key, to obtain the first public key of the radio access network device; and generate the first session key based on a second private key of the terminal device and the first public key of the radio access network device, where the first private key of the terminal device is different from the second private key of the terminal device.

With reference to the seventh aspect, in some implementations of the seventh aspect, the transceiver unit is further configured to receive a second message from the radio access network device, where the second message includes a first random number encrypted by using a second public key of the terminal device, the second public key of the terminal device has been verified by using the operator private key, and the second public key of the terminal device is generated based on the second private key of the terminal device. The processing unit is further configured to decrypt, by using the second private key of the terminal device, the first random number encrypted by using the second public key of the terminal device, to obtain the decrypted first random number. The transceiver unit is further configured to send a first response message to the radio access network device, where the first response message includes the first random number encrypted by using the first public key of the radio access network device.

With reference to the seventh aspect, in some implementations of the seventh aspect, the first response message further includes a second random number encrypted by using the first public key of the radio access network device.

With reference to the seventh aspect, in some implementations of the seventh aspect, the transceiver unit is further configured to receive a third message from the radio access network device, where the third message includes the second random number encrypted by using the second public key of the terminal device. The processing unit is further configured to decrypt, by using the second private key of the terminal device, the second random number encrypted by using the second public key of the terminal device, to obtain the decrypted second random number.

With reference to the seventh aspect, in some implementations of the seventh aspect, the transceiver unit is specifically configured to send a fourth message to the blockchain, where the fourth message includes an identifier of the radio access network device, and the fourth message is used to request the second public key of the radio access network device; and receive a second response message from the blockchain, where the second response message includes the second public key of the radio access network device.

According to an eighth aspect, a session key update apparatus is provided. The apparatus includes a transceiver unit and a processing unit. The transceiver unit is configured to receive a first message from a terminal device, where the first message includes a first public key of the terminal device, and the first public key of the terminal device is a public key that is of the terminal device and that is encrypted by using a first session key. The processing unit is configured to decrypt the first public key of the terminal device by using the first session key, to obtain a third public key of the terminal device; and generate a second session key based on a private key of the radio access network device and the third public key of the terminal device.

With reference to the eighth aspect, in some implementations of the eighth aspect, the transceiver unit is further configured to send a fifth message to a blockchain, where the fifth message includes the third public key of the terminal device, and the fifth message is used by the blockchain to sign the third public key of the terminal device.

With reference to the eighth aspect, in some implementations of the eighth aspect, the transceiver unit is further configured to obtain a fourth public key of the terminal device from the blockchain, where the fourth public key of the terminal device is a public key that is of the terminal device and that is signed by using an operator private key. The processing unit is further configured to process the fourth public key of the terminal device by using an operator public key, to obtain a second public key of the terminal device, where the second public key of the terminal device is generated based on a second private key of the terminal device, the first public key of the terminal device is generated based on the first private key of the terminal device, and the first private key of the terminal device is different from the second private key of the terminal device; and generate a second session key based on the private key of the radio access network device and the public key of the terminal device.

With reference to the eighth aspect, in some implementations of the eighth aspect, the processing unit is further configured to encrypt a first random number by using the second public key of the terminal device. The transceiver unit is further configured to send a second message to the terminal device, where the second message includes the first random number encrypted by using the second public key of the terminal device; and receive a first response message from the terminal device, where the first response message includes the first random number encrypted by using a first public key of the radio access network device. The processing unit is further configured to decrypt, by using the private key of the radio access network device, the first random number encrypted by using the first public key of the radio access network device, to obtain the decrypted first random number.

With reference to the eighth aspect, in some implementations of the eighth aspect, the first response message further includes a second random number encrypted by using the first public key of the radio access network device.

With reference to the eighth aspect, in some implementations of the eighth aspect, the processing unit is further configured to decrypt, by using the private key of the radio access network device, the second random number encrypted by using the first public key of the radio access network device, to obtain the decrypted second random number. The transceiver unit is further configured to send a third message to the terminal device, where the third message includes the second random number encrypted by using the second public key of the terminal device.

With reference to the eighth aspect, in some implementations of the eighth aspect, that the transceiver unit is specifically configured to obtain a fourth public key of the terminal device from the blockchain includes: The radio access network device sends a sixth message to the blockchain, where the sixth message includes an identifier of the terminal device, and the sixth message is used to request the fourth public key of the terminal device; and receives a third response message from the blockchain, where the third response message includes the fourth public key of the terminal device.

According to a ninth aspect, a communication apparatus is provided. The communication apparatus includes a processor and a storage medium, the storage medium stores instructions, and when the instructions are run by the processor, the communication apparatus is enabled to perform the method provided in any one of the first aspect or the possible implementations of the first aspect, or perform the method provided in any one of the second aspect or the possible implementations of the second aspect, or perform the method provided in any one of the third aspect or the possible implementations of the third aspect, or perform the method provided in any one of the fourth aspect or the possible implementations of the fourth aspect.

According to a tenth aspect, a computer-readable storage medium is provided. The computer-readable storage medium includes instructions, and when the instructions are run by a processor, the method provided in any one of the first aspect or the possible implementations of the first aspect, the method provided in any one of the second aspect or the possible implementations of the second aspect, the method provided in any one of the third aspect or the possible implementations of the third aspect, or the method provided in any one of the fourth aspect or the possible implementations of the fourth aspect is implemented.

According to an eleventh aspect, a computer product is provided. The computer program product includes instructions, and when the instructions are run by a processor, the method provided in any one of the first aspect or the possible implementations of the first aspect, the method provided in any one of the second aspect or the possible implementations of the second aspect, the method provided in any one of the third aspect or the possible implementations of the third aspect, or the method provided in any one of the fourth aspect or the possible implementations of the fourth aspect is implemented.

According to a twelfth aspect, a chip system is provided. The chip system includes: a processor, configured to invoke a computer program from a memory and run the computer program, so that a communication device in which the chip system is installed performs the method provided in any one of the first aspect or the possible implementations of the first aspect, or performs the method provided in any one of the second aspect or the possible implementations of the second aspect, or performs the method provided in any one of the third aspect or the possible implementations of the third aspect, or performs the method provided in any one of the fourth aspect or the possible implementations of the fourth aspect.

According to a thirteenth aspect, a communication system is provided, including the apparatus in the fifth aspect and the apparatus in the sixth aspect, or the apparatus in the seventh aspect and the apparatus in the eighth aspect.

### BRIEF DESCRIPTION OF DRAWINGS

FIG. 1 is a schematic diagram of an architecture of a UCN;
FIG. 2 is a schematic diagram of a network architecture in which edge clouds are widely deployed according to an embodiment of this application;
FIG. 3 is a schematic block diagram of a session key generation method according to an embodiment of this application;
FIG. 4A and FIG. 4B are a schematic interaction flowchart of a session key generation method according to an embodiment of this application;
FIG. 5 is a schematic flowchart in which a terminal device initially registers a public key according to an embodiment of this application;
FIG. 6 is a schematic flowchart in which a radio access network device initially registers a public key according to an embodiment of this application;
FIG. 7 is a schematic flowchart of a session key update method according to an embodiment of this application;
FIG. 8 is a schematic block diagram of a session key generation apparatus according to an embodiment of this application; and
FIG. 9 is a schematic block diagram of a communication apparatus according to an embodiment of this application.

### DESCRIPTION OF EMBODIMENTS

The following describes technical solutions of this application with reference to the accompanying drawings.

Embodiments of this application may be used in various communication systems, for example, a wireless local area network (wireless local area network, WLAN) system, a narrowband-internet of things (narrowband-internet of things, NB-IoT) system, a global system for mobile communications (global system for mobile communications, GSM), an enhanced data rates for GSM evolution (enhanced data rates for GSM evolution, EDGE) system, a wideband code division multiple access (wideband code division multiple access, WCDMA) system, a code division multiple access 2000 (code division multiple access, CDMA2000) system, a time division-synchronous code division multiple access (time division-synchronization code division multiple access, TD-SCDMA) system, a long term evolution (long term evolution, LTE) system, satellite communication, a 5G system, or a new communication system that emerges in the future.

A terminal device in embodiments of this application may also be referred to as user equipment (user equipment, UE), a mobile station (mobile station, MS), a mobile terminal (mobile terminal, MT), or the like, and is a device that provides voice and/or data connectivity for a user; for example, a handheld device or a vehicle-mounted device that has a wireless connection function. Currently, some examples of the terminal are a mobile phone (mobile phone), a tablet computer, a laptop computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. A specific technology and a specific device form that are used for the terminal device are not limited in embodiments of this application.

The terminal device may have a plurality of subscriber identity modules (subscriber identity modules, SIMs) or universal subscriber identity modules (universal subscriber identity modules, USIMs). In this application, the SIM may be a physical SIM card, or may be a software SIM (software SIM), a virtual SIM (virtual SIM), or an embedded SIM (embedded SIM, eSIM). It should be understood that, in this application, one USIM card may be installed on the terminal device, or a plurality of USIM cards may be installed on the terminal device. This is not limited in embodiments of this application.

An access network device is a radio access network (radio access network, RAN) node (or device) that connects a terminal to a wireless network, and may also be referred to as a base station. Currently, some examples of the RAN node are a further evolved NodeB (gNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a wireless fidelity (wireless fidelity, Wi-Fi) access point (access point, AP), and the like. In addition, in a network structure, the access network device may include a central unit (central unit, CU) node, a distributed unit (distributed unit, DU) node, or a RAN device including a CU node and a DU node. The RAN device including the CU node and the DU node splits protocol layers of a gNB in an NR system. Some functions of the protocol layers are centrally controlled by a CU, and some or all of remaining functions of the protocol layers are distributed in a DU, and the CU centrally controls the DU. In an implementation, a radio resource control (radio Resource Control, RRC) layer, a packet data convergence protocol (packet data convergence protocol, PDCP) layer, and a service data adaptation protocol (service data adaptation protocol, SDAP) layer in a protocol stack is deployed on the CU; and a radio link control (radio link control, RLC) layer, a media access control (media access control, MAC) layer, and a physical layer (physical layer, PHY) in the protocol stack is deployed on the DU. Therefore, the CU is capable of processing RRC, a PDCP, and an SDAP. The DU is capable of processing RLC, MAC, and the PHY. It may be understood that the foregoing function division is merely an example, and does not constitute a limitation on the CU and the DU. In other words, the functions may alternatively be divided between the CU and the DU in another manner. Details are not described herein in embodiments of this application. Functions of the CU may be implemented by one entity, or may be implemented by different entities. For example, the functions of the CU may be further divided. For example, a control plane (CP) is separated from a user plane (UP), that is, a CU control plane (CU-CP) and a CU user plane (CU-UP). For example, the CU-CP and the CU-UP may be implemented by different functional entities. The CU-CP and the CU-UP may be coupled to the DU to jointly implement a function of the base station. In a possible manner, the CU-CP is responsible for control plane functions, and mainly includes RRC and a PDCP-C. The PDCP-C is mainly responsible for data encryption and decryption, integrity protection, data transmission, and the like on the control plane. The CU-UP is responsible for functions of a user plane, and mainly includes the SDAP and a PDCP-U. The SDAP is mainly responsible for processing data of a core network and mapping a data flow (flow) to a bearer. The PDCP-U is mainly responsible for encryption and decryption, integrity protection, header compression, serial number maintenance, data transmission, and the like on a data plane. The CU-CP is connected to the CU-UP through an E1 interface. The CU-CP representing a gNB is connected to the core network through an Ng interface, and is connected to the DU through an F1-C (control plane). The CU-UP is connected to the DU through F1-U (user plane). Certainly, in another possible implementation, the PDCP-C is implemented on the CU-UP.

The radio access network device and the terminal device may be deployed on land, including an indoor or outdoor device, a handheld device, or a vehicle-mounted device; or may be deployed on water; or may be deployed on an airplane, a balloon, and a satellite in the air. Application scenarios of the radio access network device and the terminal device are not limited in embodiments of this application.

In addition, it should be understood that, the terminal device in this application may be an apparatus, a chip, a circuit, or the like having a function of the terminal device. The radio access network device may be an apparatus, a chip, a circuit, or the like having a function of the radio access network device.

The terminal device or the radio access network device includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). An operating system may be any one or more computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in embodiments of this application is not specifically limited in embodiments of this application provided that a program that records code of the method provided in embodiments of this application can be run to perform communication according to the method provided in embodiments of this application. For example, the method provided in embodiments of this application may be performed by the terminal device or the network device, or a functional module that can invoke and execute the program in the terminal device or the network device.

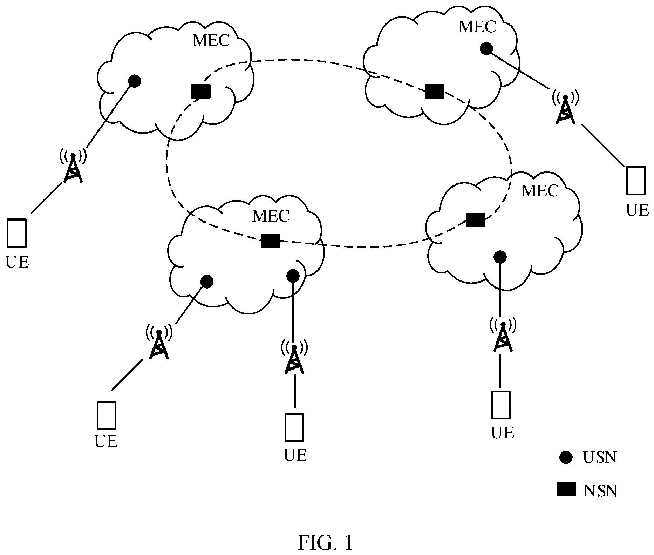

FIG. 1 is a schematic diagram of a distributed network architecture of a user-centric network (user-centric network, UCN). As shown in FIG. 1, each UE corresponds to one user service node (user service node, USN), each multi-access edge computing (Multi-access Edge Computing, MEC) has one network service node (network service node, NSN) and a plurality of USNs, and all NSNs are interconnected.

To facilitate understanding of embodiments of this application, two-way authentication between a user and a network in a solution of a conventional technology is briefly described.

In an LTE or 5G communication system, a session key is a product in a process of two-way authentication between a terminal device and a network device. For example, in an LTE communication system, two-way authentication between a terminal device and a network is completed by all of the terminal device, a mobility management entity (mobility management entity, MME), and a home subscriber server (home subscriber server, HSS). The terminal device sends an attachment request that includes a globally unique temporary identity (globally unique temporary identity, GUTI)/international mobile subscriber identity (international mobile subscriber identity, IMSI). The MME adds an ID of a visited network to the attachment request, and forwards the attachment request to the HSS. If the IMSI and the ID have been verified, an authentication vector group is generated and sent to the MME. The MME selects a vector, allocates a key, and sends an authentication request to the terminal device. The terminal device extracts information from the authentication request, and authenticity of the HS S is verified if verification succeeds; and then the terminal device calculates an authentication request response value (response, RES) and sends the response value to the MME. The MME performs comparison on the RES. If a vector in the RES is consistent with the vector selected by the MME, the terminal device has been authenticated. In this way, two-way authentication is completed, and an encryption key and a protection key are calculated based on an agreed algorithm, to implement subsequent confidential communication.

In a 5G communication system, after two-way authentication is performed between a terminal device and a network device, the terminal device and the network device agree on a security algorithm and a key that are used for signaling encryption and integrity protection in a subsequent communication process. To reduce a risk caused by key leakage, different keys are used for authentication, encryption, and integrity protection. Different keys in a mobile communication network are derived from a root key. In addition, different network elements have different functions and require different keys. Descriptions of a key derivation relationship and a key network element correspondence are referred to as a key architecture.

Compared with 4G, 5G implements unified derivation of keys for 3GPP access and non-3GPP access. In a 5G key architecture, a root key is stored in a unified data management (unified data management, UDM) and a USIM card. The root key is used to derive a key of an authentication server function (authentication servicefunction, AUSF), a key of a security anchor function (security anchor function, SEAF), and a key of an access and mobility management function (access and mobility management function, AMF) layer by layer. It should be noted that, when different authentication methods are used, calculation formulas of the key of the AUSF are different. However, regardless of 3GPP access or non-3GPP access, a same key, that is, a key of the AMF, is used to derive a non-access stratum (non-access stratum, NAS) key and an access stratum (access stratum, AS) key, to implement unified derivation.

An authentication credential repository and processing function (authentication credential repository and processing function, ARPF) stores a key K, and generates and sends a key for authentication to the AUSF. The AUSF generates and sends a key of the SEAF to the SEAF. The SEAF generates and sends a NAS protection key to the AMF, generates and sends an air interface protection key to an access network (access network, AN), and generates and sends a user plane protection key to a session management function (session management function, SMF). The SMF generates a separate key for each protocol data unit (protocol data unit, PDU) session and sends the key to a corresponding user plane function (user plane function, UPF).

5G proposes a new user plane protection manner. User plane data is not only encrypted between an air interface terminal device and the AN, but also encrypted between the terminal device and the UPF. Therefore, a network device needs to distribute a key to the UPF. In addition, for a 5G network slice function, the terminal device may access a plurality of isolated network slices, and establish a PDU session in each slice. A user key of each session is different.

A same session key is derived on a terminal device side based on a same key algorithm, and is used for encrypted communication between the terminal device and the AN and between the terminal device and the UPF.

However, in a decentralized or distributed network architecture, there is no centralized core network. As a result, a session key generation solution in an existing 5G centralized key derivation architecture is no longer applicable. Therefore, how to generate a session key and reduce a man-in-the-middle attack risk is an urgent problem to be resolved currently.

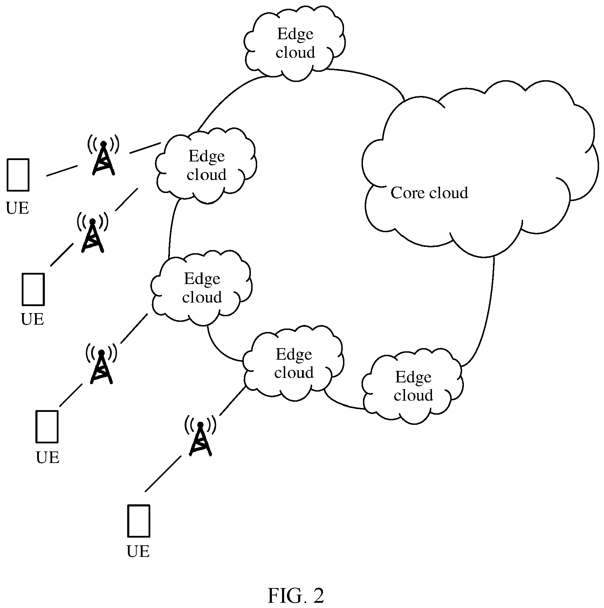

In the future, network edge cloudification becomes an inevitable trend. An edge cloud and a core cloud collaborate and complement each other. The edge cloud is closer to a user, can better support an application that has high requirements on a latency, data privacy, and the like, and is suitable for distributed deployment of network functions. Embodiments of this application are based on an application scenario in which it is assumed that edge clouds have been widely deployed. FIG. 2 is a schematic diagram of a network architecture in which edge clouds are widely deployed according to an embodiment of this application.

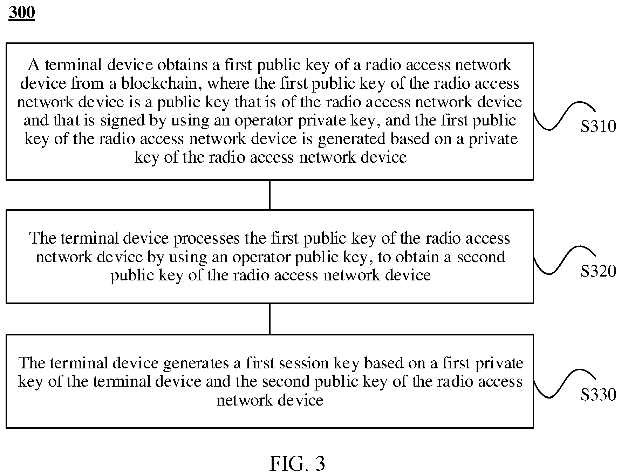

Embodiments of this application provide a session key generation method, used in a scenario in which a terminal device communicates with a radio access network device in a distributed network architecture, for example, a UCN architecture. FIG. 3 is a schematic block diagram of a session key generation method according to an embodiment of this application. The method 300 includes the following steps.

S310: A terminal device obtains a first public key of a radio access network device from a blockchain, where the first public key of the radio access network device is a public key that is of the radio access network device and that is signed by using an operator private key, and the first public key of the radio access network device is generated based on a private key of the radio access network device.

Specifically, the terminal device sends a fourth message to the blockchain, where the fourth message includes an identifier of the radio access network device, and the fourth message is used to request the first public key of the radio access network device. More specifically, the terminal device sends the fourth message to the radio access network device corresponding to the terminal device, and the radio access network device forwards the fourth message to the blockchain. Correspondingly, the blockchain receives the fourth message, queries, based on the identifier of the radio access network device, the first public key of the radio access network device stored in the blockchain, and sends the first public key to the radio access network device. In other words, the blockchain sends a second response message to the terminal device, where the second response message includes the first public key of the radio access network device. More specifically, the blockchain sends the second response message to the radio access network device, and the radio access network device forwards the second response message to the terminal device. Correspondingly, the terminal device receives the second response message, and obtains the first public key of the radio access network device from the second response message. It should be understood that the first public key of the radio access network device that the terminal device requests to obtain from the blockchain is signed by the operator private key.

S320: The terminal device processes the first public key of the radio access network device by using an operator public key, to obtain a second public key of the radio access network device.

Specifically, the terminal device verifies the first public key of the radio access network device by using the operator public key, to obtain the second public key of the radio access network device. In other words, the second public key of the radio access network device is obtained after the terminal device verifies a first private key of the radio access network device by using the operator public key. It should be understood that the first public key of the radio access network device and the second public key of the radio access network device are public keys in different states after the public key of the radio access network device is signed or verified. The first public key of the radio access network device or the second public key of the radio access network device may be considered to be generated by the radio access network device based on the private key of the radio access network device. The operator public key is known to the terminal device.

S303: The terminal device generates a first session key based on a first private key of the terminal device and the second public key of the radio access network device.

Specifically, in step S302, the terminal device obtains the public key that is of the radio access network device and that has been signed by a third party (for example, an operator), verifies validity of the public key of the radio access network device, and generates the session key based on the verified public key of the radio device and the private key of the terminal device. In other words, the terminal device generates the first session key based on the first private key of the terminal device and the second public key of the radio access network device. A manner in which the terminal device generates the first session key includes but is not limited to: multiplying the first private key of the terminal device by the second public key of the radio access network device.

A first session key generated by the radio access network device is approximately the same as the first session key generated by the terminal device. To be specific,
The radio access network device obtains a third public key of the terminal device from the blockchain, where the third public key of the terminal device is a public key that is of the terminal device and that is signed by using the operator private key, and the third public key of the terminal device is generated based on the first private key of the terminal device.

Specifically, the radio access network device sends a sixth message to the blockchain, where the sixth message includes an identifier of the terminal device, and the sixth message is used to request the third public key of the terminal device. Correspondingly, the blockchain receives the sixth message, queries, based on the identifier of the terminal device, the third public key of the terminal device stored in the blockchain, and sends the third public key of the terminal device to the radio access network device. In other words, the blockchain sends a third response message to the radio access network device, where the third response message includes the third public key of the terminal device. The radio access network device receives the third response message, and obtains the third public key of the terminal device from the third response message. It should be understood that the third public key of the terminal device that is requested by the radio access network device from the blockchain is signed by the operator private key.

The radio access network device processes the third public key of the terminal device by using the operator public key, to obtain the second public key of the terminal device.

Specifically, the radio access network device verifies the third public key of the terminal device by using the operator public key, to obtain the second public key of the terminal device. In other words, the second public key of the terminal device is obtained after the radio access network device verifies the second public key of the terminal device by using the operator public key. It should be understood that the third public key of the terminal device and the second public key of the terminal device are public keys in different states after the public key of the terminal device is signed or verified. The second public key of the terminal device and the third public key of the terminal device may be considered to be generated based on the first private key of the terminal device. The operator public key is known to the terminal device.

The radio access network device generates the first session key based on the private key of the radio access network device and the second public key of the terminal device.

Specifically, the radio access network device obtains the public key that is of the terminal device and that has been signed by the third party (for example, the operator), verifies validity of the public key of the terminal device, and generates the session key based on the verified public key of the terminal device and the private key of the radio access network device. In other words, the radio access network device generates the first session key based on the second public key of the terminal device and the private key of the radio access network device. A manner in which the radio access network device generates the first session key includes but is not limited to: multiplying the private key of the radio access network device by the third public key of the terminal device.

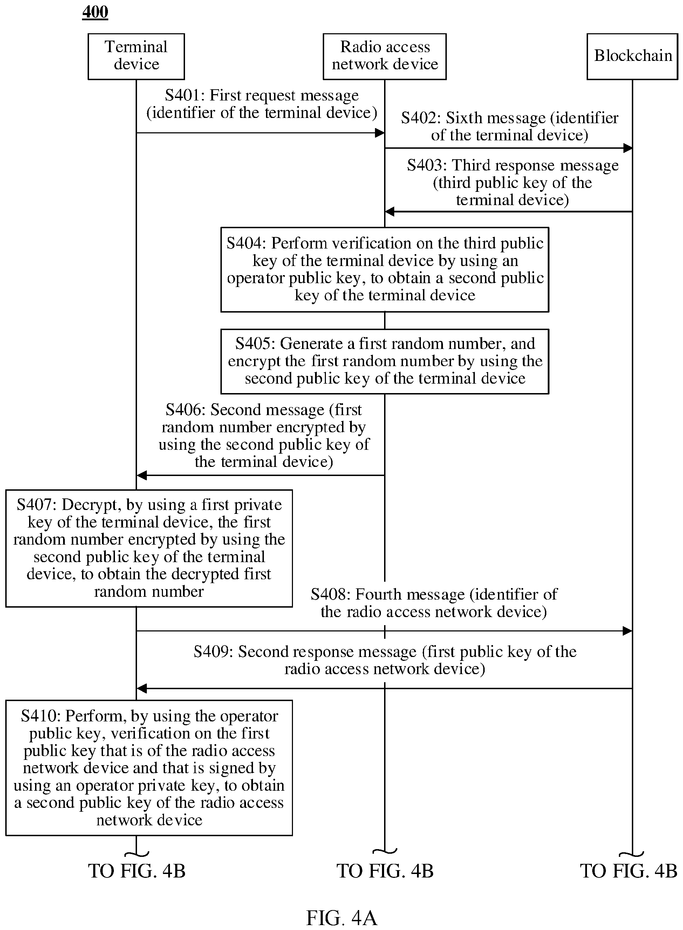

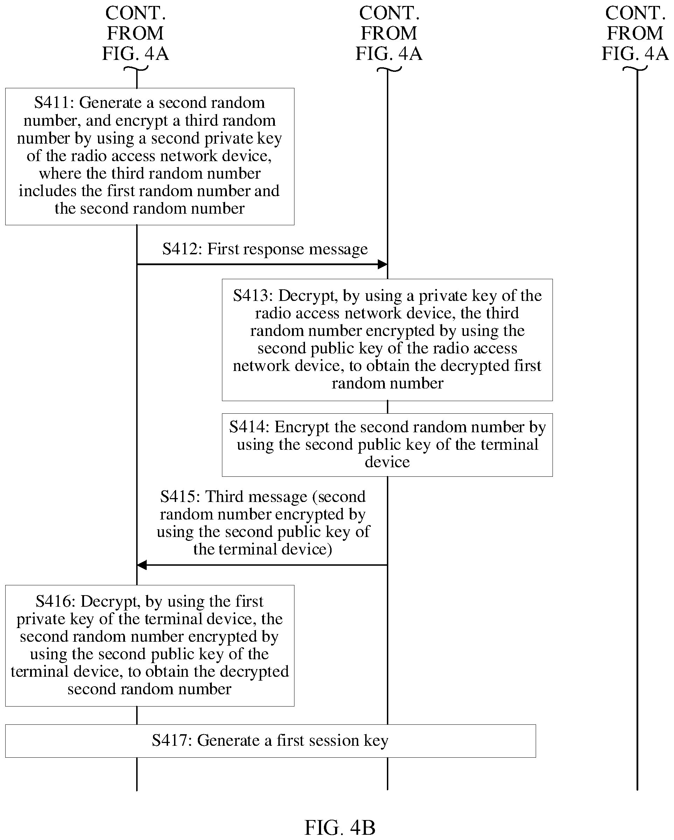

FIG. 4A and FIG. 4B are a schematic flowchart of a session key generation method 400 according to this application. The method 400 is a specific implementation process of the method 300. The following describes, with reference to FIG. 4A and FIG. 4B, the session key generation method 400 provided in an embodiment of this application. The method 400 includes the following steps.

S401: A terminal device sends a first request message to a radio access network device, where the first request message includes an identifier of the terminal device. Correspondingly, in step S401, the radio access network device receives the first request message from the terminal device.

For example, the terminal device sends the first request message to the radio access network device, where the first request message is used to request to access a network, the first request message includes but is not limited to the identifier of the terminal device, and the radio access network device is a network device accessed by the terminal device.

S402: The radio access network device sends a sixth message to a blockchain, where the sixth message includes the identifier of the terminal device, and correspondingly, the blockchain receives the third message from the radio access network device.

For example, in step S401, after receiving the request message that carries the identifier of the terminal device, the radio access network device queries, based on the identifier of the terminal, the blockchain for a public key corresponding to the identifier of the terminal device. Specifically, the radio access network device sends the sixth message to the blockchain, where the sixth message includes the identifier of the terminal device, and the sixth message is used to request to obtain a third public key of the terminal device.

S403: The blockchain sends a third response message to the radio access network device, where the third response message includes the third public key of the terminal device. Correspondingly, in step S403, the radio access network device receives the third response message from the blockchain.

Specifically, the blockchain receives the sixth message, queries, based on the identifier of the terminal device carried in the sixth message, the public key of the terminal device stored in the blockchain, and sends the third response message to the radio access network device. The third response message includes the third public key of the terminal device, and the third public key of the terminal device is a public key that is of the terminal device and that is signed by using an operator private key. The third response message is used to respond to the sixth message.

S404: The radio access network device performs verification on the third public key of the terminal device by using an operator public key, to obtain a second public key of the terminal device.

Specifically, in step S403, the radio access network device obtains, from the blockchain, the third public key that is of the terminal device and that is signed by using the operator private key, and verifies, by using the operator public key, the third public key that is of the terminal device and that is signed by using the operator private key, to obtain the second public key of the terminal device. The operator public key is known to the radio access network device.

S405: The radio access network device generates a first random number, and encrypts the first random number by using the second public key of the terminal device.

Specifically, the radio access network device generates the first random number, for example, generates a random number N, and the radio access network device encrypts the random number N by using the second public key of the terminal device. The second public key of the terminal device has been verified by using the operator public key in step S404, that is, the public key of the terminal device is obtained after verification is performed by using the operator public key.

S406: The radio access network device sends a second message to the terminal device, where the second message includes the first random number encrypted by using the second public key of the terminal device. Correspondingly, in step S406, the terminal device receives the second message from the radio access network device.

S407: The terminal device decrypts, by using a first private key of the terminal device, the first random number encrypted by using the second public key of the terminal device, to obtain the decrypted first random number. The first private key of the terminal device is unique to the terminal device, and only the terminal device can decrypt the first random number encrypted by using the second public key of the terminal device.

S408: The terminal device sends a fourth message to the blockchain, where the fourth message includes an identifier of the radio access network device. Correspondingly, in step S408, the blockchain receives the fourth message from the terminal device.

For example, the terminal device sends the fourth message to the blockchain, to request to obtain a first public key of the radio access network device. The fourth message includes but is not limited to the identifier of the radio access network device. The radio access network device is the network device accessed by the terminal device.

S409: The blockchain sends a second response message to the terminal device, where the second response message includes the first public key of the radio access network device. Correspondingly, in step S409, the terminal device receives the second response message from the blockchain.

Specifically, the blockchain receives the fourth message, queries, based on the identifier of the radio terminal device carried in the fourth message, the public key of the radio access network device stored in the blockchain, and sends the second response message to the terminal device. The second response message includes the first public key of the radio access network device, and the first public key of the radio access network device is a public key that is of the radio access network device and that is signed by using the operator private key. The second response message is used to respond to the fourth message.

Optionally, step S408 and step S409 may be specifically as follows: The terminal device sends the fourth message to the radio access network device accessed by the terminal device, and the radio access network device forwards the fourth message to the blockchain. Similarly, the blockchain queries the public key of the radio access network device based on the identifier of the radio access network device carried in the fourth message, and sends the found first public key of the radio access network device to the radio access network device accessed by the terminal device. The radio access network device accessed by the terminal device forwards, to the terminal device, the second response message that carries the first public key of the radio access network device. For brevity, details are not described in this embodiment of this application.

It should be understood that both steps S408 and S409 are optional steps. The terminal device may alternatively obtain the first public key of the radio access network device in, but not limited to, the following implementation.

The radio access network device sends a seventh message to the blockchain, where the seventh message includes the identifier of the radio access network device. The blockchain receives the seventh message, and queries the public key of the radio access network device, that is, the first public key of the radio access network device, based on the identifier of the radio access network device. The blockchain sends the found first public key of the radio access network device to the radio access network device, and the radio access network device forwards the first public key of the radio access network device to the terminal device.

The foregoing implementation may be performed before step S406, or may be performed after step S406, or may be performed simultaneously with step S406. This is not limited in this embodiment of this application.

S410: The terminal device performs, by using the operator public key, verification on the first public key that is of the radio access network device and that is signed by using the operator private key, to obtain a second public key of the radio access network device.

Specifically, in step S409, the terminal device obtains, from the blockchain, a first private key that is of the radio access network device and that is signed by using the operator private key, and verifies, by using the operator public key, the first public key that is of the radio access network device and that is signed by using the operator private key, to obtain the second public key of the radio access network device. The operator public key is known to the terminal device.

S411: The terminal device generates a second random number, and encrypts a third random number by using the second public key of the radio access network device, where the third random number includes the first random number and the second random number.

Specifically, in step S407, the terminal device obtains the first random number through decryption, generates the second random number, splices the first random number and the second random number to form the third random number, and encrypts the third random number by using the second public key of the radio access network device. For example, the first random number is N, the generated second random number is M, and the random number N and the random number M are spliced. A specific splicing manner is not limited in this embodiment of this application.

S412: The terminal device sends a first response message to the radio access network device, where the first response message includes the third random number encrypted by using the second public key of the radio access network device. Correspondingly, in step S412, the radio access network device receives the first response message from the terminal device.

S413: The radio access network device decrypts, by using a private key of the radio access network device, the third random number encrypted by using the second public key of the radio access network device, to obtain the decrypted first random number.

Specifically, the radio access network device receives the encrypted third random number from the terminal device, and decrypts, based on the private key of the radio access network device, the third random number encrypted by using the second public key of the radio access network device, to obtain the first random number and the second random number. If the first random number is a random number previously generated by the radio access network device, authentication on the terminal device is completed, that is, the radio access network device determines that the terminal device is valid, or in other words, the radio access network device determines that the terminal device is a target terminal device of the radio access network device. The target terminal device may be understood as a terminal device associated with the radio access network device. The private key of the radio access network device is unique to the radio access network device, and only the radio access network device can decrypt the third random number encrypted by using the second public key of the radio access device.

S414: The radio access network device encrypts the second random number by using the second public key of the terminal device.

S415: The radio access network device sends a third message to the terminal device, where the third message includes the second random number encrypted by using the second public key of the terminal device. Correspondingly, in step S415, the terminal device receives the third message from the radio access network device.

S416: The terminal device decrypts, by using the first private key of the terminal device, the second random number encrypted by using the second public key of the terminal device, to obtain the decrypted second random number.

Specifically, the terminal device receives the encrypted second random number from the radio access network device, and decrypts, based on the first private key of the terminal device, the second random number encrypted by using the second public key of the terminal device, to obtain the decrypted second random number. If the second random number is the random number generated by the terminal device in step S411, authentication on the radio access network device is completed, that is, the terminal device determines that the radio access network device is valid, or in other words, the terminal device determines that the radio access network device is a target access network device of the terminal device. The target access network device may be understood as a radio access network device associated with the terminal device. The first private key of the terminal device is unique to the terminal device, and only the terminal device can decrypt the second random number encrypted by using the second public key of the terminal device.

In this case, mutual authentication between the terminal device and the radio access network device is completed. In addition to the first private key of the terminal device and the public key of the terminal device, the terminal device further includes the second public key of the radio access network device. In addition to the public key of the radio access network device and the private key of the radio access network device, the radio access network device further includes the second public key of the terminal device. Step S417 may be performed, that is, a first session key (a shared key) is generated.

Specifically, the terminal device multiplies the first private key of the terminal device by the second public key of the radio access network device. Similarly, the radio access network device multiplies the private key of the radio access network device by the second public key of the terminal device. For example, the first private key of the terminal device is K1, s, the second public key of the terminal device is K1, p, the private key of the radio access network device is K2, s, and the second public key of the radio access network device is K2, p. In this case, the obtained first session key Ks=K1, s×K2, p=K2, s×K1, p. The first session key may be used to encrypt a subsequent session.

In this embodiment of this application, the public keys of the radio access network device and the terminal device are separately signed by using the operator private key, and are stored in the blockchain. In a process of mutual authentication of two parties, one party obtains the public key of the other party, and obtains the session key based on the private key of the party and the public key of the other party. A root key does not need to be shared between the terminal device and the radio access network device in advance. Therefore, a defect of a current cellular network based on a symmetric key, that is, a distribution trust assumption of the symmetric key, can be resolved. In addition, in this embodiment of this application, a trust anchor is constructed on the blockchain, to avoid a man-in-the-middle attack risk during public key distribution.

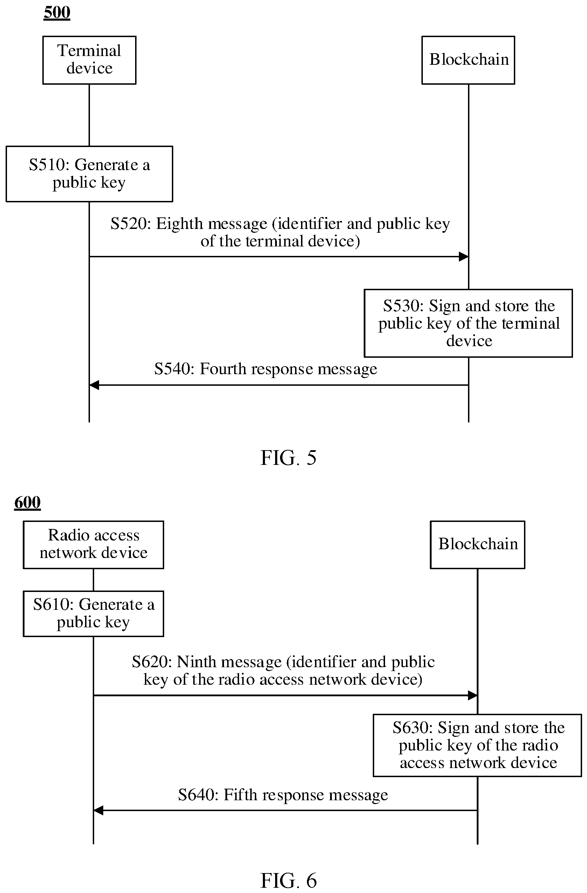

FIG. 5 is a schematic flowchart in which a terminal device initially registers a public key with a blockchain. As shown in FIG. 5, the method 500 includes the following steps.

S510: A terminal device generates a public key.

For example, the terminal device generates a private key K1, s. More specifically, a SIM or a USIM in the terminal device generates the private key K1, s (for example, a first private key of the terminal device). The terminal device obtains a public key K1, p (for example, a third public key of the terminal device) through calculation based on elliptic curve Diffie-Hellman key agreement (elliptic curve diffie-hellman key agreement, ECDH key agreement) and the private key. It should be understood that a specific process of generating the public key K1, p by the terminal device is not limited in this embodiment of this application.

S520: The terminal device sends an eighth message to a blockchain, where the eighth message includes an identifier of the terminal device and the public key K1, p of the terminal device. Correspondingly, in step S520, the blockchain receives the eighth message from the UE.

For example, the terminal device sends the eighth message to the blockchain. For example, the terminal device provides a record for an operator through an application programming interface (application programming interface, API) call (BC RR REQ) provided by the blockchain. For example, the terminal device provides the identifier of the terminal device and the public key K1, p of the terminal device for the operator.

S530: The blockchain signs and stores the public key K1, p of the terminal device.

For example, after receiving the eighth message, the blockchain obtains the identifier (for example, a UEID) of the terminal device and the public key K1, p of the terminal device that are carried in the eighth message, and signs the public key K1, p of the terminal device by using a private key K0, s of the blockchain. For example, the signature may be represented as S[(UEID, K1, p), K0, s], and a signed record (as transaction processing) is stored in the blockchain.

S540: The blockchain sends a fourth response message to the terminal device. Correspondingly, in step S540, the terminal device receives the fourth response message from the blockchain.

For example, after successfully storing a record of the public key K1, p of the terminal device in step S530, or in other words, successfully storing the public key K1, p that is of the terminal device and that is signed by the operator, the blockchain sends a response message to the terminal device, where the response message is used to notify the terminal device that the blockchain has successfully signed and stored the public key K1, p of the terminal device.

For example, the fourth response message includes but is not limited to an "OK" message.

FIG. 6 is a schematic flowchart in which a radio access network device initially registers a public key with a blockchain. As shown in FIG. 6, the method 600 includes the following steps.

S610: A radio access network device generates a public key.

For example, the radio access network device generates a private key K2, s, and obtains a public key K2, p (for example, a first public key of the radio access network device) through calculation based on ECDH and the private key. It should be understood that a specific process of generating the public key K2, p by the radio access network device is not limited in this embodiment of this application.

S620: The radio access network device sends a ninth message to a blockchain, where the ninth message includes an identifier of the radio access network device and the public key K2, p of the radio access network device. Correspondingly, in step S620, the blockchain receives the ninth message from the radio access network device.

For example, the radio access network device sends the ninth message to the blockchain. For example, the radio access network device provides a record for an operator through an API call (BC_RR_REQ) provided by the blockchain. For example, the radio access network device provides the identifier of the radio access network device and the public key K2, p of the radio access network device for the network operator.

S630: The blockchain signs and stores the public key K2, p of the radio access network device.

For example, after receiving the ninth message, the blockchain obtains the identifier (for example, a BSID) of the radio access network device and the public key K2, p of the radio access network device that are carried in the ninth message, signs the public key K2, p of the radio access network device by using a private key K0, s of the blockchain. The signature may be represented as S[(BSID, K2, p), K0, s], and a signed record (as transaction processing) is stored in the blockchain.

S640: The blockchain sends a fifth response message to the radio access network device. Correspondingly, in step S640, the radio access network device receives the fifth response message from the blockchain.

For example, after successfully storing a record of the public key K2, p of the radio access network device in step S630, or in other words, successfully storing the public key K2, p that is of the radio access network device and that is signed by the operator, the blockchain sends a response message to the radio access network device, where the response message is used to notify the radio access network device that the blockchain has successfully signed and stored the public key K2, p of the radio access network device.

For example, the fifth response message includes but is not limited to an "OK" message.

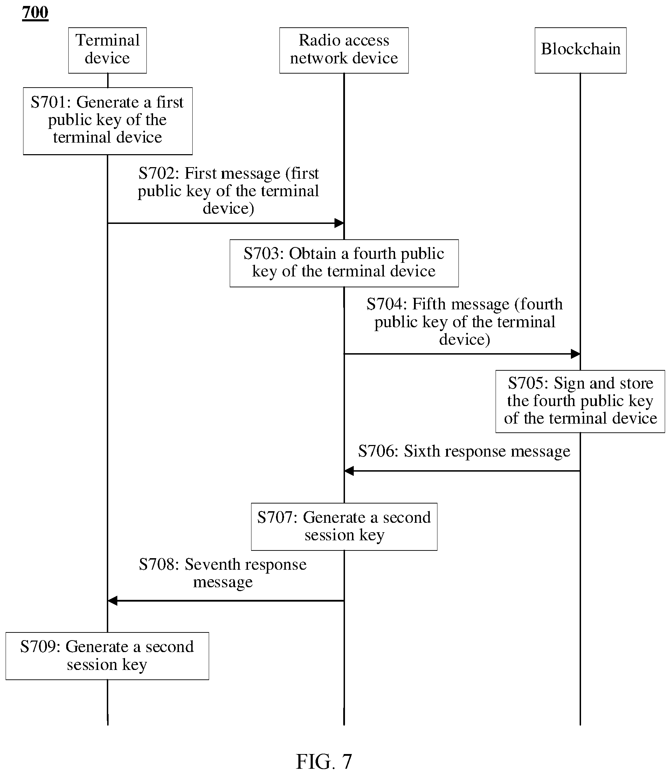

FIG. 7 is a schematic flowchart of session key update. In this embodiment of this application, an example in which a terminal device initiates session key update is used for description. As shown in FIG. 7, the method 700 includes the following steps.

S701: A terminal device generates a first public key of the terminal device.

For example, the terminal device generates a new private key, for example, a second private key of the terminal device, and obtains the first public key through calculation based on ECDH and the private key. It should be understood that a specific process of generating the first public key of the terminal device by the terminal device is not limited in this embodiment of this application.

S702: The terminal device sends a first message to a radio access network device, where the first message includes the first public key that is of the terminal device and that is encrypted by using a first session key. Correspondingly, in step S702, the radio access network device receives the first message from the terminal device.

Optionally, the first message may further include an identifier of the terminal device.

S703: The radio access network device obtains a fourth public key of the terminal device.

For example, the radio access network device receives the first message, obtains, from the first message, the first public key that is of the terminal device and that is encrypted by using the first session key, and performs decryption by using the first session key obtained by the radio access network device in step S417, to obtain the fourth public key of the terminal device. It should be understood that the first public key of the terminal device and the fourth public key of the terminal device are public keys in different states after the public key of the terminal device is encrypted or decrypted. The first public key of the terminal device and the fourth public key of the terminal device are public keys of the terminal device, and may be considered to be generated by the terminal device based on the second private key of the terminal device. It should be noted that the second private key of the terminal device is different from the first private key of the terminal device in the method 600. In other words, the second private key of the terminal device is different from the private key used by the terminal device to generate the first session key.

S704: The radio access network device sends a fifth message to the blockchain, where the fifth message includes the fourth public key of the terminal device. Optionally, the fifth message further includes the identifier of the terminal device.

S705: The blockchain signs and stores the fourth public key of the terminal device.

For example, after receiving the fifth message, the blockchain obtains the identifier (UEID) of the terminal device and the fourth public key of the terminal device that are carried in the fifth message, signs the fourth public key (K3, p) of the terminal device by using a private key K0, s of the blockchain. The signature may be represented as S[(UEID, K3, p), K0, s], and a signed record (as transaction processing) is stored in the blockchain.

S706: The blockchain sends a sixth response message to the radio access network device. Correspondingly, in step S706, the radio access network device receives the sixth response message from the blockchain.

For example, after successfully storing a record of the fourth public key of the terminal device in step S705, or in other words, successfully storing the fourth public key that is of the terminal device and that is signed by an operator, the blockchain sends a response message to the radio access network device, where the response message is used to notify the radio access network device that the blockchain has successfully signed and stored the fourth public key of the terminal device.

S707: The radio access network device generates a second session key.

For example, the radio access network device obtains the second session key based on the fourth public key of the terminal device and a private key of the radio access network device that are obtained by the radio access network device through decryption in step S703.

Specifically, the radio access network device multiplies the private key of the radio access network device by the fourth public key of the terminal device. For example, the fourth public key of the terminal device is K3, p, and the private key of the radio access network device is K2, s. In this case, the obtained second session key Ks'=K2, s×K3, p. The second session key is an updated session key.

S708: The radio access network device sends a seventh response message to the terminal device, where the seventh response message is used to notify the terminal device that a new session key has been generated. Correspondingly, in step S708, the terminal device receives the seventh response message from the radio access network device.

S709: The terminal device generates a second session key.

Specifically, the terminal device multiplies a new private key generated by the terminal device, that is, the second private key of the terminal device, by a second public key of the radio access network device. For example, the second private key of the terminal device is K3, s, and the second public key of the radio access network device is K2, p. In this case, the obtained second session key Ks'=K3, s×K2, p. The second session key is an updated session key.

It should be understood that, for the session key update triggered by the terminal device, a sequence in which the radio access network device and the terminal device each generate the second session key is not limited in this embodiment of this application. To be specific, the radio access network device may generate the second session key before the terminal device generates the second session key, or may generate the second session key after the terminal device generates the second session key, or may simultaneously generate the second session key when the terminal device generates the second session key. In addition, a sequence in which the radio access network device registers the fourth public key of the terminal device with the blockchain and a sequence in which the radio access network device and the terminal device each generate the second session key are not limited in this embodiment of this application.

In an optional manner, the radio access network device may alternatively trigger session key update. To be specific, the radio access network device generates a new private key, for example, a first private key of the radio access network device, and generates a responded third public key of the radio access network device based on the private key. The radio access network device may encrypt the third public key of the radio access network device by using the first session key, and send the encrypted third public key to the terminal device. The terminal device decrypts, by using the first session key, information received by the terminal device, to obtain a fourth public key of the radio access network device, and generates the second session key based on the first private key of the terminal device and the fourth public key of the radio access network device. The radio access network device generates the second session key by using the first private key of the radio access network device and the second public key of the terminal device. It should be understood that the third public key of the radio access network device and the fourth public key of the radio access network device are public keys in different states after the public key of the radio access network device is encrypted or decrypted. In addition, the radio access network device may further register a new public key generated by the radio access network device with the blockchain. For a registration procedure of the radio access network device, refer to the foregoing descriptions. This is not limited in this embodiment of this application.

It should be understood that the radio access network device and the terminal device may simultaneously trigger the session key update. For a specific implementation, refer to the foregoing descriptions. Some simple adaptation may be required, but this also falls within the protection scope of this embodiment of this application. This is not described in this embodiment of this application.

In this embodiment of this application, the session key update does not depend on two-way authentication, but the session key is generated based on a previous session key, so that excessive exposure of a weakness of an asymmetric key is reduced, and a quantum attack risk is reduced to a maximum extent.

It should be understood that the embodiments corresponding to the foregoing four methods are merely examples. A person skilled in the art may make corresponding variations according to the foregoing embodiments, and such modifications also fall within the protection scope of embodiments of this application.

It should be further understood that the embodiments corresponding to the foregoing four methods may be referred to or combined with each other. Embodiments of this application are not limited thereto.

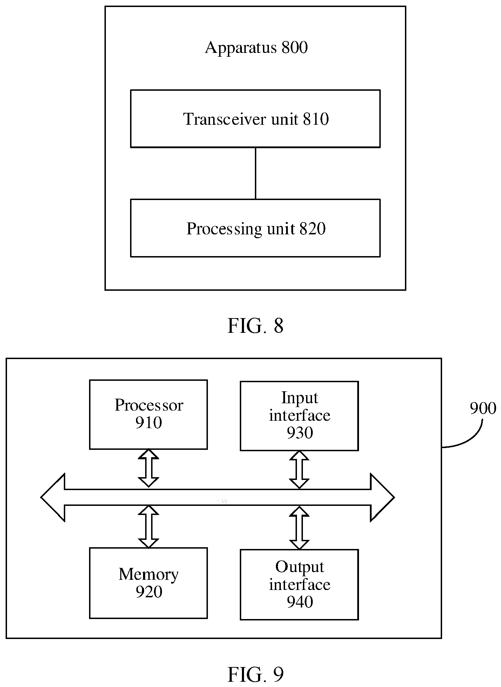

The foregoing describes in detail the methods provided in embodiments of this application with reference to FIG. 3 to FIG. 7. The following describes in detail apparatuses provided in embodiments of this application with reference to FIG. 8 and FIG. 9.

FIG. 8 is a schematic block diagram of a session key generation apparatus 800 according to an embodiment of this application. The apparatus may be used for the terminal device in the method embodiments in FIG. 3, FIG. 4A and FIG. 4B, FIG. 5, and FIG. 7, or may be a component that implements the methods in the embodiments in FIG. 3, FIG. 4A and FIG. 4B, FIG. 5, and FIG. 7, for example, a chip. The apparatus 800 includes a transceiver unit 810 and a processing unit 820.

The transceiver unit 810 is configured to obtain a first public key of a radio access network device from a blockchain, where the first public key of the radio access network device is a public key that is of the radio access network device and that is signed by using an operator private key, and the first public key of the radio access network device is generated based on a private key of the radio access network device.

The processing unit 820 is configured to:
process the first public key of the radio access network device by using an operator public key, to obtain a second public key of the radio access network device; and
generate a first session key based on a first private key of the terminal device and the second public key of the radio access network device.

Optionally, the transceiver unit 810 is further configured to send a first message to the radio access network device, where the first message includes a first public key of the terminal device, the first public key of the terminal device is a public key that is of the terminal device and that is encrypted by using the first session key, the first public key of the terminal device is generated based on a second private key of the terminal device, and the second private key of the terminal device is different from the first private key of the terminal device.

The processing unit 820 is further configured to generate a second session key based on the second private key of the terminal device and the second public key of the radio access network device.

Optionally, the transceiver unit 810 is further configured to receive a second message from the radio access network device, where the second message includes a first random number encrypted by using a second public key of the terminal device, the second public key of the terminal device has been verified by using the operator private key, and the second public key of the terminal device is generated based on the first private key of the terminal device.

The processing unit 820 is further configured to decrypt, by using the first private key of the terminal device, the first random number encrypted by using the second public key of the terminal device, to obtain the decrypted first random number.

The transceiver unit 810 is further configured to send a first response message to the radio access network device, where the first response message includes the first random number encrypted by using the second public key of the radio access network device.

Optionally, the first response message further includes a second random number encrypted by using the second public key of the radio access network device.

Optionally, the transceiver unit 810 is further configured to receive a third message from the radio access network device, where the third message includes the second random number encrypted by using the second public key of the terminal device.

The processing unit 820 is further configured to decrypt, by using the first private key of the terminal device, the second random number encrypted by using the second public key of the terminal device, to obtain the decrypted second random number.

Optionally, the transceiver unit 810 is specifically configured to:
send a fourth message to the blockchain, where the fourth message includes an identifier of the radio access network device, and the fourth message is used to request the first public key of the radio access network device; and
receive a second response message from the blockchain, where the second response message includes the first public key of the radio access network device.

FIG. 9 is a schematic diagram of a communication apparatus 900 according to an embodiment of this application. As shown in FIG. 9, the apparatus 900 may include a processor 910, and may further include a memory 920. The memory 920 is configured to store instructions, and the processor 910 is configured to execute the instructions stored in the memory 920, so that the apparatus 900 implements the steps performed in the method corresponding to any one of FIG. 3 to FIG. 7.

Further, the apparatus 900 may further include an input interface 930 (that is, an example of a transceiver module) and an output interface 940 (that is, another example of the transceiver module). Further, the processor 910, the memory 920, the input interface 930, and the output interface 940 may communicate with each other through an internal connection path, to transmit a control signal and/or a data signal. The memory 920 is configured to store a computer program. The processor 910 may be configured to invoke the computer program from the memory 920 and run the computer program, to control the input interface 930 to receive a signal, and control the output interface 940 to send a signal, to complete the steps performed by the terminal device in the foregoing methods. The memory 920 may be integrated into the processor 910, or may be separated from the processor 910.

Optionally, if the communication apparatus 900 is a communication device, the input interface 930 is a receiver, and the output interface 940 is a transmitter. The receiver and the transmitter may be a same physical entity or different physical entities. When the receiver and the transmitter are a same physical entity, the receiver and the transmitter may be collectively referred to as a transceiver.

Optionally, if the communication apparatus 900 is a chip or a circuit, the input interface 930 is an input interface, and the output interface 940 is an output interface.

In an implementation, it may be considered that functions of the input interface 930 and the output interface 940 are implemented by a transceiver circuit or a dedicated transceiver chip. It may be considered that the processor 910 is implemented by a dedicated processing chip, a processing circuit, a processor, or a general-purpose chip.

In another implementation, it may be considered that the communication device provided in this embodiment of this application is implemented by a general-purpose computer. To be specific, program code that is used to implement functions of the processor 910, the input interface 930, and the output interface 940 is stored in the memory 920, and a general-purpose processor implements the functions of the processor 910, the input interface 930, and the output interface 940 by executing the code in the memory 920.

For concepts, explanations, detailed descriptions, and other steps of the apparatus 900 that are related to the technical solutions provided in embodiments of this application, refer to the descriptions of the content in the foregoing methods or other embodiments. Details are not described herein again.

According to the methods provided in embodiments of this application, this application further provides a computer program product. The computer program product includes instructions. When the instructions are run by a processor, the method of the terminal device in any one of the foregoing method embodiments is implemented.

According to the methods provided in embodiments of this application, this application further provides a computer-readable medium. The computer-readable medium includes instructions. When the instructions are run by a processor, the method of the terminal device in the foregoing method embodiments is implemented.

According to the methods provided in embodiments of this application, this application further provides a chip system. The chip system includes a processor, configured to invoke a computer program from a memory and run the computer program, so that a communication device on which the chip system is installed performs the method on a terminal device side in any one of the foregoing method embodiments.

According to the methods provided in embodiments of this application, this application further provides a system, including the foregoing one or more terminal devices and at least one of the foregoing one or more radio access network devices.

An embodiment of this application further provides a processing apparatus, including a processor and an interface. The processor is configured to perform the communication method in any one of the foregoing method embodiments.

It is understood that the processing apparatus may be a chip. For example, the processing apparatus may be a field programmable gate array (field programmable gate array, FPGA), may be a general-purpose processor, a digital signal processor (digital signal processor, DSP), an application specific integrated circuit (application specific integrated circuit, ASIC), the field programmable gate array (field programmable gate array, FPGA), another programmable logic device, a discrete gate, a transistor logic device, or a discrete hardware component, may be a system on chip (system on chip, SoC), may be a central processing unit (central processing unit, CPU), may be a network processor (network processor, NP), may be a digital signal processor (digital signal processor, DSP), may be a micro controller unit (micro controller unit, MCU), or may be a programmable logic device (programmable logic device, PLD) or another integrated chip. The processor may implement or perform the methods, the steps, and logical block diagrams that are disclosed in embodiments of this application. The general-purpose processor may be a microprocessor, or the processor may be any conventional processor or the like. The steps of the method disclosed with reference to embodiments of this application may be directly performed by a hardware decoding processor, or may be performed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory in the system and the method described in this specification is intended to include, but not limited to, these memories and any memory of another proper type.

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer instructions are loaded and executed on a computer, all or a part of the procedures or functions according to embodiments of this application are generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible to the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid state disk (solid state disc, SSD)), or the like.

The network device and the terminal device in the foregoing apparatus embodiments completely correspond to the network device or the terminal device in the method embodiments. A corresponding module or unit performs a corresponding step. For example, the communication unit (the transceiver) performs a receiving or sending step in the method embodiments, and a step other than the sending step and the receiving step may be performed by the processing module (the processor). For a function of a specific unit, refer to a corresponding method embodiment. There may be one or more processors.

Terms such as "component", "module", and "system" used in this specification are used to indicate computer-related entities, hardware, firmware, combinations of hardware and software, software, or software being executed. For example, a component may be but is not limited to a process that runs on a processor, a processor, an object, an executable file, an execution thread, a program, or a computer. As illustrated by using figures, both a computing device and an application that runs on the computing device may be components. One or more components may reside within a process or an execution thread, and a component may be located on one computer or distributed between two or more computers. In addition, these components may be executed from various computer-readable media that store various data structures. For example, the components may perform communication by using a local process or a remote process and based on, for example, a signal having one or more data packets (for example, data from two components interacting with another component in a local system, a distributed system, or across a network such as the internet interacting with another system by using the signal).

It should be understood that, an "embodiment" mentioned throughout this specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments in any appropriate manner.

It should be understood that in embodiments of this application, numbers "first", "second", ... are merely used to distinguish between different objects, for example, to distinguish between different network devices, and constitute no limitation on the scope of embodiments of this application. Embodiments of this application are not limited thereto.

It should be further understood that, in this application, "when" and "if" mean that a network element performs corresponding processing in an objective situation, and are not intended to limit time. The terms do not mean that the network element is required to have a determining action during implementation, and do not mean any other limitation.

It should be further understood that, in embodiments of this application, "B corresponding to A" represents that B is associated with A, and B may be determined based on A. However, it should be further understood that determining B based on A does not mean that B is determined based only on A. B may alternatively be determined based on A and/or other information.

It should be further understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

Unless otherwise specified, an expression used in this application similar to an expression that "an item includes one or more of the following: A, B, and C" usually means that the item may be any one of the following: A; B; C; A and B; A and C; B and C; A, B, and C; A and A; A, A, and A; A, A, and B; A, A, and C; A, B, and B; A, C, and C; B and B; B, B and B; B, B and C; C and C; C, C, and C; and another combination of A, B and C. In the foregoing descriptions, three elements A, B, and C are used as an example to describe an optional case of the item. When an expression is "the item includes at least one of the following: A, B, ..., and X", in other words, more elements are included in the expression, a case to which the item is applicable may also be obtained according to the foregoing rule.

It may be understood that in embodiments of this application, the terminal device and/or the radio access network device may perform some or all steps in embodiments of this application. These steps or the operations are merely examples. In embodiments of this application, other operations or variations of various operations may be further performed. In addition, the steps may be performed in a sequence different from a sequence presented in embodiments of this application, and not all the operations in embodiments of this application may be performed.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division, and may be other division during actual implementation. For example, a plurality of units or components may be combined or may be integrated into another system, or some features may be ignored or not performed. In addition, the displayed or discussed mutual couplings or direct couplings or communication connections may be implemented through some interfaces. The indirect couplings or communication connections between the apparatuses or the units may be implemented in electrical, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or a part of the technical solutions may be implemented in a form of a software product. The computer software product is stored in a storage medium and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A session key generation method, comprising:
obtaining, by a terminal device, a first public key of a radio access network device from a blockchain, wherein the first public key of the radio access network device is a public key that is of the radio access network device and that is signed by using an operator private key, and the first public key of the radio access network device is generated based on a private key of the radio access network device;
processing, by the terminal device, the first public key of the radio access network device by using an operator public key, to obtain a second public key of the radio access network device; and
generating, by the terminal device, a first session key based on a first private key of the terminal device and the second public key of the radio access network device.

2. The method according to claim 1, wherein the method further comprises:
sending, by the terminal device, a first message to the radio access network device, wherein the first message comprises a first public key of the terminal device, the first public key of the terminal device is a public key that is of the terminal device and that is encrypted by using the first session key, the first public key of the terminal device is generated based on a second private key of the terminal device, and the second private key of the terminal device is different from the first private key of the terminal device; and
generating, by the terminal device, a second session key based on the second private key of the terminal device and the second public key of the radio access network device.

3. The method according to claim 1 or 2, wherein the method further comprises:
receiving, by the terminal device, a second message from the radio access network device, wherein the second message comprises a first random number encrypted by using a second public key of the terminal device, the second public key of the terminal device has been verified by using the operator private key, and the second public key of the terminal device is generated based on the first private key of the terminal device;
decrypting, by the terminal device by using the first private key of the terminal device, the first random number encrypted by using the second public key of the terminal device, to obtain the decrypted first random number; and
sending, by the terminal device, a first response message to the radio access network device, wherein the first response message comprises the first random number encrypted by using the second public key of the radio access network device.

4. The method according to claim 3, wherein the first response message further comprises a second random number encrypted by using the second public key of the radio access network device.

5. The method according to claim 4, wherein the method further comprises:
receiving, by the terminal device, a third message from the radio access network device, wherein the third message comprises the second random number encrypted by using the second public key of the terminal device; and
decrypting, by the terminal device by using the first private key of the terminal device, the second random number encrypted by using the second public key of the terminal device, to obtain the decrypted second random number.

6. The method according to any one of claims 1 to 5, wherein the obtaining, by a terminal device, a first public key of a radio access network device from a blockchain comprises:
sending, by the terminal device, a fourth message to the blockchain, wherein the fourth message comprises an identifier of the radio access network device, and the fourth message is used to request to obtain the first public key of the radio access network device; and
receiving, by the terminal device, a second response message from the blockchain, wherein the second response message comprises the first public key of the radio access network device.

7. A session key generation apparatus, comprising a transceiver unit and a processing unit, wherein the transceiver unit is configured to obtain a first public key of a radio access network device from a blockchain, wherein the first public key of the radio access network device is a public key that is of the radio access network device and that is signed by using an operator private key, and the first public key of the radio access network device is generated based on a private key of the radio access network device; and
the processing unit is configured to:
process the first public key of the radio access network device by using an operator public key, to obtain a second public key of the radio access network device; and
generate a first session key based on a first private key of the terminal device and the second public key of the radio access network device.

8. The apparatus according to claim 7, wherein the transceiver unit is further configured to send a first message to the radio access network device, wherein the first message comprises a first public key of the terminal device, the first public key of the terminal device is a public key that is of the terminal device and that is encrypted by using the first session key, the first public key of the terminal device is generated based on a second private key of the terminal device, and the second private key of the terminal device is different from the first private key of the terminal device; and
the processing unit is further configured to generate a second session key based on the second private key of the terminal device and the second public key of the radio access network device.

9. The apparatus according to claim 7 or 8, wherein the transceiver unit is further configured to receive a second message from the radio access network device, wherein the second message comprises a first random number encrypted by using a second public key of the terminal device, the second public key of the terminal device has been verified by using the operator private key, and the second public key of the terminal device is generated based on the first private key of the terminal device;
the processing unit is further configured to decrypt, by using the first private key of the terminal device, the first random number encrypted by using the second public key of the terminal device, to obtain the decrypted first random number; and
the transceiver unit is further configured to send a first response message to the radio access network device, wherein the first response message comprises the first random number encrypted by using the second public key of the radio access network device.

10. The apparatus according to claim 9, wherein the first response message further comprises a second random number encrypted by using the second public key of the radio access network device.

11. The apparatus according to claim 10, wherein the transceiver unit is further configured to receive a third message from the radio access network device, wherein the third message comprises the second random number encrypted by using the second public key of the terminal device; and
the processing unit is further configured to decrypt, by using the first private key of the terminal device, the second random number encrypted by using the second public key of the terminal device, to obtain the decrypted second random number.

12. The apparatus according to any one of claims 7 to 11, wherein the transceiver unit is specifically configured to:
send a fourth message to the blockchain, wherein the fourth message comprises an identifier of the radio access network device, and the fourth message is used to request to obtain the first public key of the radio access network device; and
receive a second response message from the blockchain, wherein the second response message comprises the first public key of the radio access network device.

13. A communication apparatus, wherein the communication apparatus comprises a processor and a storage medium, the storage medium stores instructions, and when the instructions are run by the processor, the communication apparatus is enabled to perform the method according to any one of claims 1 to 6.

14. A computer-readable storage medium, wherein the computer-readable storage medium comprises instructions, and when the instructions are run by a processor, the method according to any one of claims 1 to 6 is performed.

15. A computer program product, wherein the computer program product comprising instructions, and when the instructions are run by a processor, the method according to any one of claims 1 to 6 is performed.
